# DEMANDE DE BREVET EUROPEEN

(11) **EP 2 305 036 A1**
(43) Date de publication de la demande: **06.04.2011**
(21) Numéro de dépôt: 09305923.6
(22) Date de dépôt: 30.09.2009
(51) Int. Cl.: A21B 1/08, A21B 1/14

(54) **Four comportant un cadre tubulaire de chauffage**

(71) Demandeur: Bongard, 67810 Holtzheim (FR)
(72) Inventeur: Depiesse, Thierry, 67207 Niederhausbergen (FR); Bader, Daniel, 67150 Schaeffersheim (FR)
(74) Mandataire: Littolff, Denis

(57) **Abrégé**

Four comportant un bâti dans lequel sont prévus au moins un compartiment de cuisson et des moyens chauffants comportant un ensemble de tubes métalliques (1', 2', 3', 4', 5, 6, 7) formant des circuits fermés identiques et juxtaposés véhiculant de la vapeur d'eau, chaque circuit comprenant notamment un cadre périphérique (C) tubulaire d'allure rectangulaire dont les montants tubulaires verticaux (1', 2') sont reliés par des traverses tubulaires transversales (3', 4', 5, 6, 7) délimitant le ou les compartiments de cuisson, au moins une boucle (8, 9) dépassant dudit cadre (C) dans le prolongement d□un montant tubulaire (1', 2') s'étendant dans un échangeur thermique.

Une des traverses tubulaires (4') cadre périphérique (C), distincte des montants (1', 2'), est fixée sensiblement perpendiculairement à ces derniers sans possibilité de passage du fluide, la ou les boucles (8, 9) étant raccordée(s) à ladite traverse (4') avec une ouverture (16) de passage du fluide.

## Description

La présente invention a trait à un four, et plus particulièrement à un four destiné à la cuisson du pain.

Classiquement, les fours dont il est question sont basés sur des moyens chauffants comportant un ensemble de tubes métalliques formant des circuits fermés identiques et juxtaposés véhiculant de la vapeur d'eau, chaque circuit comprenant notamment un cadre périphérique tubulaire d'allure rectangulaire dont les montants verticaux sont reliés par des tubes transversaux délimitant le ou les compartiments de cuisson, au moins une boucle du circuit dépassant dudit cadre périphérique s'étendant dans un échangeur thermique qui fournit par transfert l'énergie calorifique au fluide caloporteur, en l'occurrence l'eau.

Ces fours, dits "fours à sole", sont donc basés sur l'association de tubes permettant la circulation de vapeur d'eau et entourant les espaces de cuisson, associés à un échangeur thermique qui permet de porter l'eau contenue dans les tubes à une température dépassant les 100° C provoquant ainsi un phénomène de thermosiphon.

Jusqu'ici, le cadre tubulaire était de fabrication monotube, les portions rectilignes du tracé du circuit étant séparées par des portions cintrées permettant la constitution dudit circuit sur la base d'un seul type de tube après formage.

Plus précisément, chaque cadre périphérique tubulaire complet est actuellement constitué à partir de deux demi-cadres totalement ou partiellement symétriques, assemblés par soudage dans le plan de symétrie.

Dans les fours actuels, l'appareil à buée est par ailleurs constitué de masses métalliques d'allure parallélépipédique disposées latéralement dans chaque compartiment de cuisson. Chaque masse, pour tirer au mieux partie des moyens chauffants, est dimensionnée de manière à ce que ses côtés supérieurs et inférieurs soient disposés au voisinage des tubes transversaux délimitant les compartiments, et elle est placée pratiquement contre un montant latéral. Les échanges de chaleur s'effectuent alors sur trois côtés.

Dans les fours traditionnels à cadre tubulaire fabriqué par cintrage des tubes, la ou les boucles dépassant dudit cadre et s'étendant dans un échangeur thermique est(sont) disposée(s) au niveau du(des) coin(s) inférieur(s), la boucle ne pouvant pas être complètement fermée du fait des contraintes nées du cintrage. Comme elle est d'une seule pièce avec le tube transversal formant le côté inférieur du cadre d'allure rectangulaire, il se crée une certaine distance entre le montant tubulaire d'allure verticale dudit cadre et la boucle qui le prolonge, au niveau de la convergence des branches de la boucle.

Pour le compartiment inférieur, la masse métallique de l'appareil à buée ne repose par conséquent que partiellement sur des tubes chauffants, et le transfert d'énergie ne se fait dès lors pas de manière optimale. Or, compte tenu de l'importance du fonctionnement des appareils à buée dans la cuisson du pain, il est préférable d'aboutir à un rendement optimisé de leur fonctionnement, c'est-à-dire à un rendement optimisé des transferts de chaleur des moyens chauffants à destination des composants de l'appareil à buée.

En partie supérieure du four, l'existence du cintrage dans les coins pose également, quoique dans une moindre mesure, ce problème.

La présente invention remédie aux insuffisances constatées à cet égard dans les fours traditionnels, en proposant une configuration dans laquelle les transferts de chaleur entre les moyens chauffants tubulaires d'une part, et l'appareil à buée d'autre part, sont identiques et optimisés pour tous les compartiments du four.

Les modifications concernent d'abord le mode de raccordement de la boucle plongée dans l'échangeur avec le cadre tubulaire, en ce qu'une des traverses tubulaires du cadre périphérique, distincte des montants, est fixée sensiblement perpendiculairement à ces derniers sans possibilité de passage du fluide, la ou les boucles étant alors raccordée(s) à ladite traverse avec une ouverture de passage du fluide.

Il n'y a alors plus d'espace résiduel entre les montants et la traverse du cadre tubulaire au niveau de la fermeture de la boucle externe, et par conséquent plus de portions de la surface des masses des appareils à buée dépourvues de contact avec des tronçons tubulaires remplis de fluide caloporteur.

Le transfert de chaleur est dès lors maximal, à tous les étages ou compartiments, entre la structure tubulaire constituant les moyens chauffants et les appareils à buée.

En général, dans les fours classiques, le cadre périphérique tubulaire est orienté verticalement, et la traverse tubulaire du cadre périphérique à laquelle est raccordée la ou les boucle(s) est placée à la base dudit cadre. Dans la plupart des configurations actuelles de fours à sole, la ou les boucles, lorsqu'il y en a deux, se situent dès lors au niveau des coins inférieurs du cadre tubulaire d'allure rectangulaire.

Le cintrage restant un moyen de fabrication aisé, notamment pour lesdites boucles incluses dans les échangeurs thermiques, ces boucles comportent de préférence une portion en forme de goutte plus ou moins rectangulaire, dont les deux extrémités se resserrent en forme de goulot, notamment au niveau de leur raccordement aux deux côtés adjacents du cadre tubulaire rectangulaire.

De préférence, selon la configuration de l'invention, la traverse tubulaire du cadre périphérique opposée à celle qui comporte la boucle (ou les boucles) est également fixée sensiblement perpendiculairement aux montants tubulaires, des ouvertures dans les montants permettant cependant le passage du fluide.

L'extrémité des montants tubulaires proximale de la traverse du cadre y débouchant est alors obturée par un bouchon, notamment à des fins de remplissage/vidange du circuit par du liquide caloporteur.

Il est à noter que les traverses tubulaires et l'extrémité intérieure de la ou des boucles sont fixées respectivement aux montants tubulaires et à la traverse tubulaire dans laquelle débouche(nt) la ou les boucles par soudage.

L'invention va à présent être décrite plus en détail, en référence aux figures annexées, pour lesquelles :
- la figure 1 montre un circuit tubulaire tel qu'utilisé dans l'art antérieur, présentant un plan médian de symétrie et deux boucles inférieures intégrées à des échangeurs de chaleur (non représentés) ;
- la figure 2 représente un circuit tubulaire comportant les améliorations selon la présente invention ;
- la figure 3 illustre, en vue perspective, un ensemble de circuits tubulaires selon l'invention dans une structure applicable à un four à sole ;
- la figure 4 montre, en coupe, un détail agrandi des parties des circuits tubulaires de l'invention qui sont modifiées par rapport à l'art antérieur de la figure 1.

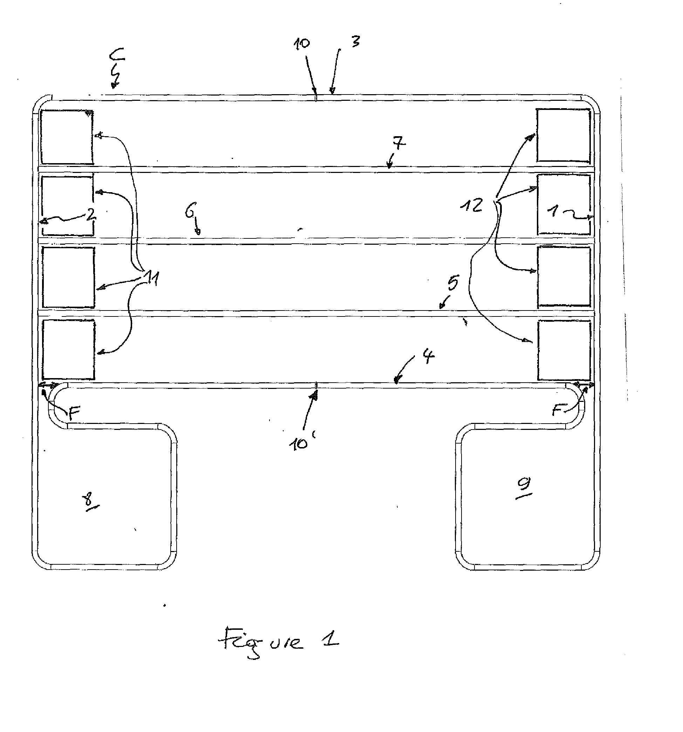

En référence à la figure 1, chaque circuit identique constituant l'ensemble de tubes formant les moyens de chauffage du four à sole comporte un cadre (C) périphérique d'allure rectangulaire formé de deux montants latéraux (1, 2) et deux traverses tubulaires d'allure horizontale (3, 4). Des tubes transversaux (5, 6, 7) délimitent en l'occurrence quatre compartiments.

Deux boucles (8, 9), disposées aux deux coins inférieurs du cadre rectangulaire (C), sont intégrées dans des échangeurs primaire et secondaire (non représentés) permettant de chauffer l'eau parcourant les tubulures à une température supérieure à 100° C, de sorte que c'est en réalité de la vapeur d'eau qui est véhiculée dans les différents tubes du circuit apparaissant en figure 1.

Le cadre périphérique (C) est en réalité constitué à l'aide de deux tubes cintrés identiques fixés par des soudures (10, 10') médianes à l'aide d'une étinceleuse. Les masses métalliques latérales (11, 12) constituent un appareil à buée, lesdites masses (11, 12) étant chauffées par les tubes du circuit pour pouvoir produire de la vapeur lorsqu'elles sont elles-mêmes aspergées d'eau. Dans les compartiments du four délimité par les traverses (5, 6, 7), trois côtés des masses métalliques (11, 12) sont soumis dans leur totalité à une possibilité d'échange de chaleur avec les tubulures voisines.

Le cas du compartiment délimité par les traverses (4, 5) est un peu particulier, car le côté inférieur des blocs (11, 12) n'est pas susceptible d'organiser dans la totalité de sa longueur un échange de chaleur. Les zones (F), que l'on qualifie de zones froides, ne permettent en effet pas un transfert de chaleur direct et immédiat de tubes vers des blocs de l'appareil à buée.

En partie supérieure, au niveau des deux coins supérieurs, l'existence du cintrage implique par ailleurs une augmentation de la distance entre la traverse tubulaire (3) et le côté supérieur des masses métalliques (11, 12). Le résultat est également que les transferts de chaleur dans cette zone ne sont pas optimisés.

Globalement, il est à noter que dans cette configuration de moyens de chauffage, les échanges de chaleur ne sont donc pas optimisés au niveau des coins des circuits tubulaires.

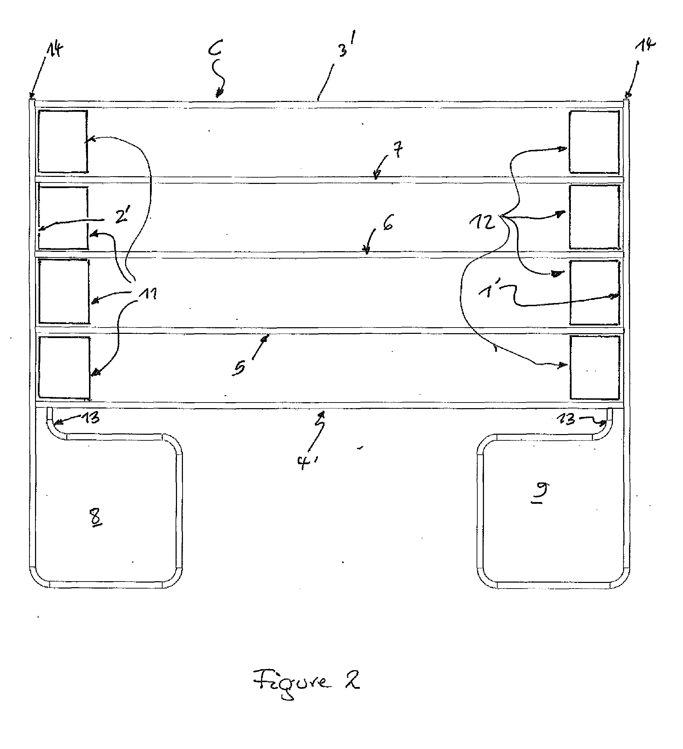

La solution adoptée par l'invention, qui apparaît en figure 2, remédie à ces insuffisances, dans la mesure où l'extrémité intérieure (13) des boucles (8, 9) est à présent raccordée à un tube transversal (4') lui-même fixé par soudage aux montants (1, 2).

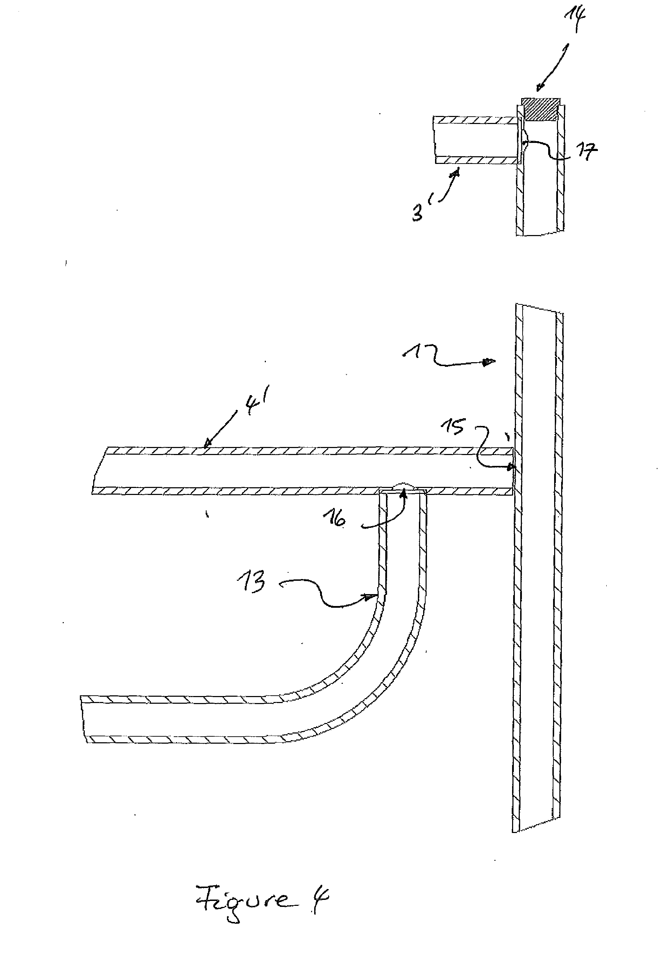

Par ailleurs, l'extrémité supérieure desdits montants (1, 2) est fixée à une traverse tubulaire (3') qui y est également raccordée par soudage. L'absence de cintrage, comme cela est le cas dans la figure 1, nécessite par conséquent l'adjonction de bouchons supérieurs (14). Les détails de construction, dans ces zones, apparaissent en figure 4.

Pour garantir le passage de l'eau dans les deux échangeurs situés au niveau des deux boucles (8, 9), la traverse tubulaire (4') n'est pas directement reliée aux montants tubulaires (1, 2), la fixation (15) de la traverse (4') auxdits montants (1, 2) étant borgne. Elle se fait par soudure, de même que pour la fixation de l'extrémité (13) au-dessous de la traverse (4'), un percement (16) étant dans ce cas réalisé pour permettre l'écoulement du flux de vapeur d'eau.

Il est à noter que, contrairement à la traverse tubulaire (4'), les traverses (5, 6, 7, 3') sont reliées au circuit de fluide, des orifices (17) assurant le passage entre les montants (1, 2) et lesdites traverses (5, 6, 7, 3').

L'avantage de la structure de l'invention, en termes d'échanges de chaleur avec les masses métalliques de l'appareil à buée, est évident.

Ainsi, comme cela apparaît clairement en figure 2, chacune desdites masses (11, 12) est logée à même enseigne, à proximité immédiate de trois tubulures réparties sur trois de leurs côtés.

La fabrication du circuit tubulaire tel qu'il apparaît en figure 2 est du coup différente du mode de fabrication utilisé pour la structure de la figure 1. Il n'est plus question de deux tubulures cintrées identiques soudées symétriquement, mais de deux montants tubulaires (1', 2') dont les extrémités sont munies des boucles (8, 9) et auxquelles sont soudées les traverses tubulaires (3', 4', 5, 6, 7). Les extrémités intérieures (13) des boucles (8, 9) sont elles-mêmes soudées à la traverse tubulaire (4').

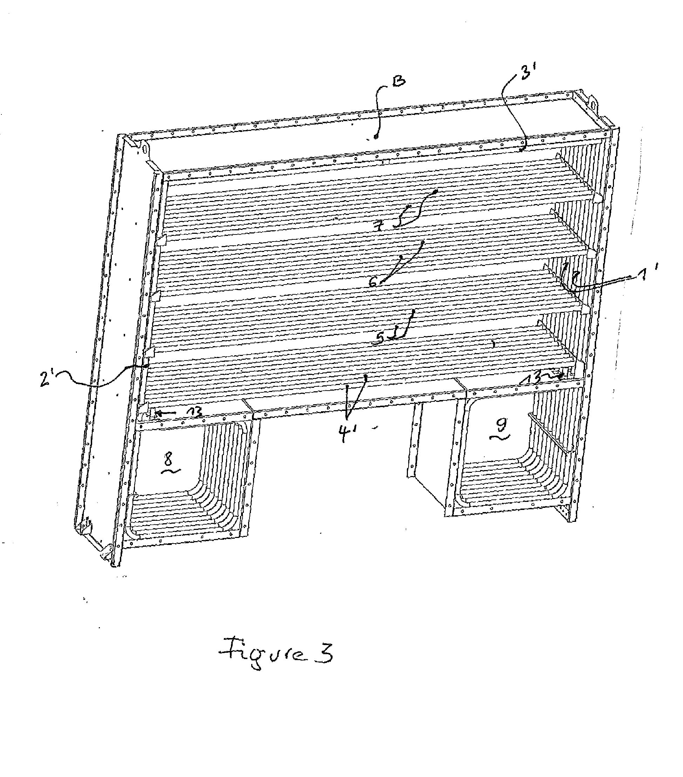

La figure 3 montre l'ensemble des circuits (C) de la figure 2 juxtaposés pour former, avec un bâti additionnel de rigidification (B), les moyens de chauffage du four de l'invention.

L'exemple de l'invention illustré en figures 2 à 4 n'en est bien entendu pas limitatif. Au contraire, cette invention englobe les variantes de formes et de configurations qui sont à la portée de l'homme de l'art.

## Revendications

1. Four comportant un bâti dans lequel sont prévus au moins un compartiment de cuisson et des moyens chauffants comportant un ensemble de tubes métalliques(1, 2, 3, 4, 5, 6 7) formant des circuits fermés identiques et juxtaposés véhiculant de la vapeur d'eau, chaque circuit comprenant notamment un cadre périphérique (C) tubulaire d'allure rectangulaire dont les montants tubulaires verticaux (1, 2) sont reliés par des traverses tubulaires transversales (3, 4, 5, 6, 7) délimitant le ou les compartiments de cuisson, au moins une boucle (8, 9) dépassant dudit cadre (C) dans le prolongement d'un montant tubulaire (1, 2) s'étendant dans un échangeur thermique, **caractérisé en ce qu'**une des traverses tubulaires (4) du cadre périphérique (C), distincte des montants (1, 2) est fixée sensiblement perpendiculairement à ces derniers sans possibilité de passage du fluide, la ou les boucles (8, 9) étant raccordée(s) à ladite traverse (4) avec une ouverture (16) de passage du fluide.

2. Four selon la revendication précédente, **caractérisé en ce que** le cadre périphérique (C) tubulaire est orienté verticalement, et la traverse tubulaire (4) du cadre périphérique (C) à laquelle est raccordée la ou les boucle(s) (8, 9) est placée à la base dudit cadre (C).

3. Four selon l'une des revendications précédentes, **caractérisé en ce que** la boucle (8, 9) comporte une portion en forme de goutte, les deux extrémités de la boucle se resserrant en forme de goulot au niveau de leur raccordement au cadre tubulaire (C).

4. Four selon l'une des revendications précédentes, **caractérisé en ce que** la traverse tubulaire (3) du cadre périphérique (C) opposée à celle (4) qui comporte la ou les boucles (8, 9) est fixée sensiblement perpendiculairement aux montants tubulaires (1, 2), des ouvertures (17) dans les montants (1, 2) permettant le passage du fluide.

5. Four selon la revendication précédente, **caractérisé en ce que** l'extrémité des montants tubulaires (1, 2) proximale de la traverse (3) du cadre (C) y débouchant est obturée par un bouchon (14).

6. Four selon l'une des revendications précédentes, **caractérisé en ce que** les traverses tubulaires (3,4, 5, 6, 7) et l'extrém!té intérieure (13) de la ou des boucles (8, 9) sont fixées respectivement aux montants tubulaires (1, 2) et à la traverse tubulaire (4) par soudage.
